# EUROPÄISCHE PATENTSCHRIFT

(11) **EP 0 748 579 B1**
(45) Veröffentlichungstag und Bekanntmachung des Hinweises auf die Patenterteilung: **20.06.2001**
(21) Anmeldenummer: 96114857.4
(22) Anmeldetag: 03.02.1993
(51) Int. Cl.: A01B 61/02

(54) **Landwirtschaftliche Maschine**
Agricultural machine
Machine agricole

(30) Priorität: 13.02.1992 DE 4204170
(43) Veröffentlichungstag der Anmeldung: 18.12.1996
(62) Teilanmeldung aus: 93101615.8
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Bresch, Robert, Dipl.-Ing., 49565 Bramsche (DE)

(56) Entgegenhaltungen:
- EP-A- 0 003 368
- EP-A- 0 445 439
- DE-A- 2 043 908
- DE-A- 4 040 652

## Beschreibung

Die Erfindung betrifft eine landwirtschaftliche Maschine gemäß des Oberbegriffes des Patentansprüches 1.

Eine derartige Maschine ist in der DE-A-20 43 908 beschrieben.

Bei dieser Maschine ist das die Eingangswelle aufweisende Eingangsgehäuse in einer horizontal angeordneten Schiebeführung gegen eine Federkraft verschiebbar. Bei einer zu langen Gelenkwelle kann das Eingangsgehäuse gegen die Federkraft verschoben werden und der als Keilriemen ausgebildete Antriebsmechanismus wird unterbrochen. Diese ausweichbare Anordnung des Eingangsgehäuses läßt sich nicht bei Maschinen, die quer zur Fahrtrichtung verlaufende Antriebswellen eines Antriebsstranges aufweisen, einsetzen.

Der Erfindung liegt die Aufgabe zugrunde, eine einfache elastische Ausweichmöglichkeit bei quer verlaufenden Abgangswellen aufweisenden Eingangsgehäusen zu schaffen.

Diese Aufgabe wird durch die kennzeichnenden Merkmale des Anspruches 1 gelöst. Infolge dieser Maßnahmen ergibt sich ein elastisch kontrolliertes Ausweichen des Eingangsgehäuses sowie eine exakt definierte Betriebsposition des Eingangsgehäuses durch das die Schwenkbewegung in Betriebsposition begrenzende Anschlagelement.

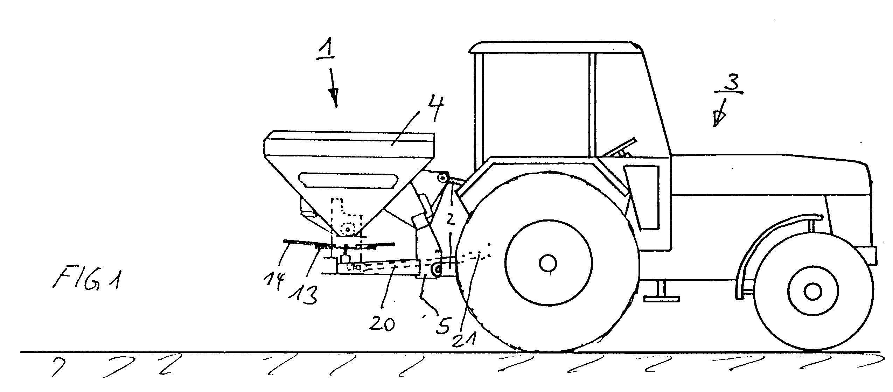

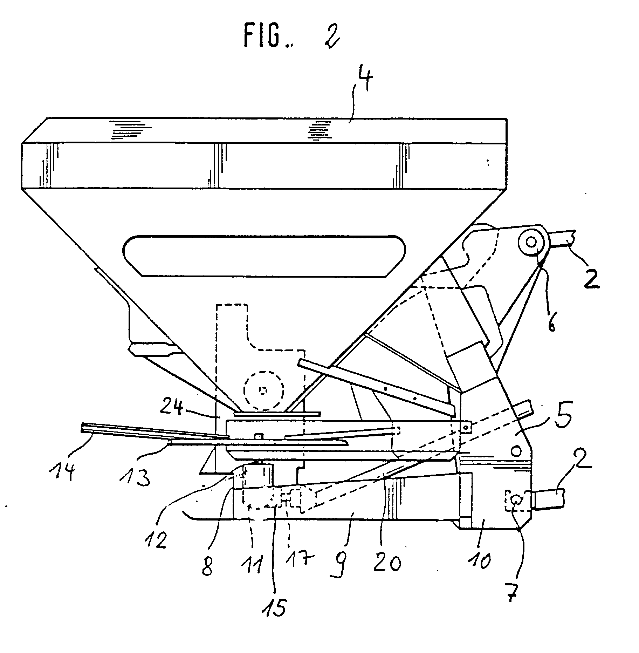

Weitere Einzelheiten der Erfindung sind den übrigen Unteransprüchen, der Beispielsbeschreibung und den Zeichnungen zu entnehmen. Hierbei zeigen
- Fig. 1: einen an einen Ackerschlepper angebauten Zentrifugaldüngerstreuer in der Seitenansicht und in Prinzipdarstellung,

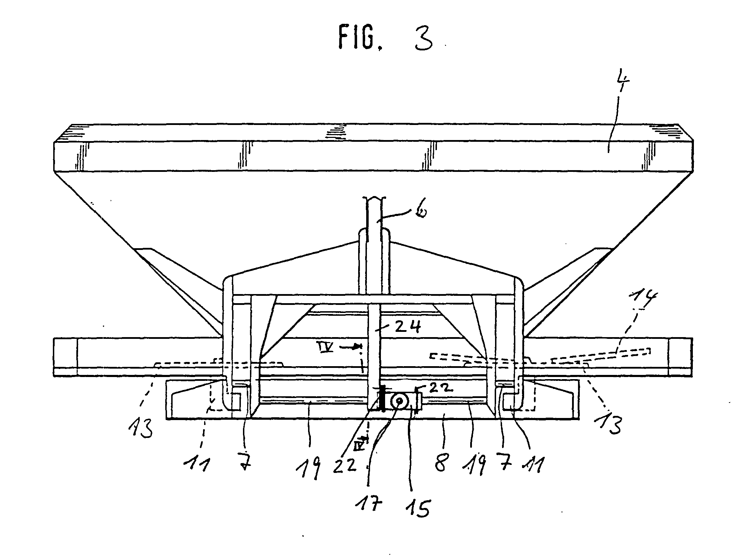

- Fig. 2: den Zentrifugaldüngerstreuer in Seitenansicht und vergrößertem Maßstab,

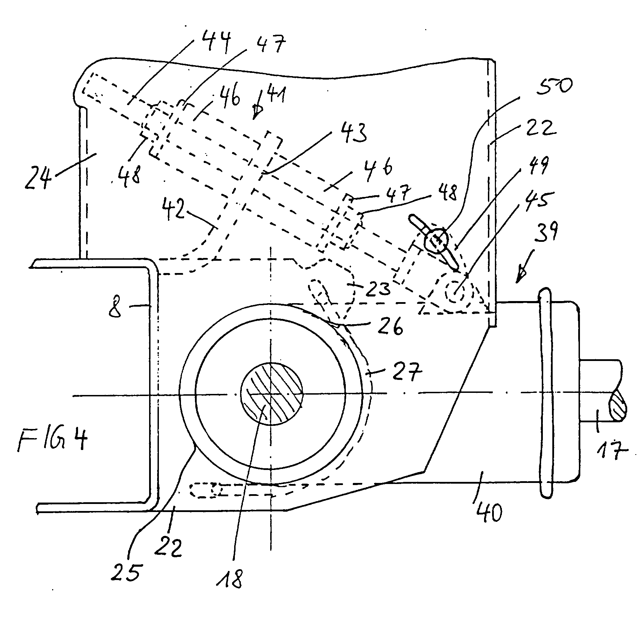

- Fig. 3: den Zentrifugaldüngerstreuer in der Vorderansicht,
- Fig. 4: das Eingangsgetriebegehäuse im eingebauten Zustand in der Ansicht IV - IV und
- Fig. 5: das Eingangsgetriebe im eingebauten Zustand mit einer weiteren Aufhängungsvorrichtung.

Die als Zentrifugaldüngerstreuer 1 ausgebildete landwirtschaftliche Maschine ist an den Drei-punktkraftheber 2 des Ackerschleppers 3 in bekannter Weise angeordnet. Der Zentrifugaldüngerstreuer 1 weist den Vorratsbehälter 4 und den Rahmen 5 auf. An der Vorderseite des Rahmens 5 befinden sich das obere Dreipunktkupplungselement 6 und die beiden unteren Kupplungselemente 7, über weiche der Zentrifugaldüngerstreuer 1 an den Dreipunktkraftheber 2 des Ackerschleppers 3 in bekannter Weise angebaut wird. Der Rahmen 5 weist die hintere Quertraverse 8 auf. Die hintere Quertraverse 8 ist als U-Profil ausgebildet. Die hintere Quertraverse 8 ist über die beiden nach hinten ragenden Länasstreben 9 mit dem Vorderteil 10 des Rahmens 5 verbunden. An den beiden äußeren Enden der Quertraverse 8 sind jeweils die Winkeigetriebe 11 angeordnet. Auf den aufrechten Ausgangswellen 12 der Winkeigetriebe 11 ist jeweils eine Schleuderscheibe 13 mit Wurfschaufein 14 angeordnet. Den Schleuderscheiben 13 wird aus dem Vorratsbehälter 4 das sich in diesem befindliche Material den Schleuderscheiben 13 über Dosierelemente in einstellbarer Weise zudosiert. Die Schleuderscheiben 13 verteilen dann das zudosierte Material mit ihren Wurfschaufein 14 in Breitverteilung auf der Bodenoberfläche.

In der Mitte der Quertraverse ist an dieser das Eingangsgetriebe 39 angeordnet. Das Eingangsgetriebe 39 weist das Eingangsgehäuse 40 und auf seiner Vorderseite die Eingangswelle 17 auf. Seitlich treten aus dem Gehäuse 40 des Eingangsgetriebes 39 die Wellen 18 heraus, über weiche die Schleuderscheiben 13 mittels der Verbindungswellen 19 und Winkeigetriebe 11 rotierend angetrieben werden. An die Eingangswelle 17 ist die Gelenkwelle 20 angeschlossen, welche schlepperseitig an die Zapfwelle 21 des Schleppers 3 angeschlossen ist.

Das Eingangsgehäuse 40 des Eingangsgetriebes 39 ist mittels der beiden Halterungen 22 und 23 am Rahmen 5 der Maschine 1 befestigt. Die Halterung 22 wird von dem Kettenschacht 24 gebildete welcher zwischen der Quertraverse 8 und dem Vorratsbehälter 4 angeordnet ist. Im unteren Bereich des Kettenschachtes 24 befindet sich die Aufnahmeöffnung 25 zur Aufnahme des Eingangsgehäuses 40 des Eingangsgetriebes 39. Auf der anderen Seite des Eingangsgehäuses 40 ist die eine U-förmige Aufnahmeöffnung 26 aufweisende Halterungslasche 23 angeordnet, in welcher das Eingangsgehäuse 40 liegt. In dieser Lasche 23 wird das Eingangsgehäuse 40 mittels der Federspange 27 gehalten.

Die Sicherungseinrichtung ist als federndes Element 41 ausgebildet. Hierzu ist an der Quertraverse 8 die Halterung 42 mit der Bohrung 43 angeordnet. Durch durch Bohrung 43 ist der Schraubbolzen 44 gesteckt, der mit dem Bolzen 45 an dem Eingangsgehäuse 40 angeordnet ist. Auf diesem Bolzen 44 sind auf jeder Seite der Halterung 42 die beiden Gummifedern 46 des federnden Elementes 41 angeordnet. Mittels der Scheiben 47 und der Muttern 48, die auf dem Schraubbolzen 44 angeordnet sind, wird das Eingangsgetriebe 39 in seiner Normalposition gehalten. Zwischen dem Ansatzstück 49 des Schraubbolzens 44 und der Halterung 22 für das Eingangsgetriebe 39 ist die Abschereinrichtung 50 angeordnet. Das Eingangsgetriebe 39 kann gegen die federnden Elemente 41 sowohl nach oben wie nach unten ausweichen.

Das Eingangsgetriebe 39 mit dem Eingangsgehäuse 40 und der Eingangswelle 17 ist in den Halterungen 22 und 23 begrenzt schwenkbeweglich um die durch die Wellen 18 verlaufende Drehachse schwenkbar angeordnet. Die Funktionsweise der Sicherungseinrichtung, ist folgende:

Der auf dem Boden gestellte Zentrifugaldüngerstreuer 1 wird an den Dreipunktkraftheber 2 des Ackerschleppers 3 angeschlossen. Anschließend wird die auf der Eingangswelle 17 des Eingangsgetriebes 39 befestigte Gelenkwelle 20 an die Zapfwelle 21 des Ackerschleppers 3 angeschlossen. Wenn nun über den Dreipunktkraftheber 2 der Zentrifugaldüngerstreuer 1 angehoben wird, und die Gelenkwelle zu lang ist, wird die Gelenkwelle 20 ganz zusammengeschoben. Die Gelenkwelle 20 beginnt mit großer Kraft auf die Eingangswelle 17 und somit auf das Eingangsgetriebe 39 zu drücken, wenn die Maschine weiter angehoben wird, da die Gelenkwelle 20, die zwischen der Eingangswelle 17 und der Zapfwelle 21 angeordnet ist, zu lang ist.

Wenn der Zentrifugaldüngerstreuer 1 nun noch weiter angehoben wird, wird aufgrund der zu langen Gelenkwelle 20 und der hieraus resultierenden auf die Eingangswelle und das Eingangsgetriebe wirkende Kraft das Eingangsgetriebe 39 gegen die Kraft der Feder verschwenkt. Das Eingangsgetriebe 39 wird aufgrund der von der Gelenkwelle 20 auf die Eingangswelle 17 einwirkenden Kraft und des sich verringernden Abstandes zwischen Eingangswelle 17 und der Zapfwelle 21 aufgrund des Anhebens des Zentrifugaldüngerstreuers 1 nach unten geschwenkt. Aufgrund dieses Vorganges schwenkt das Eingangsgetriebe 39 deutlich nach unten und die Gelenkwelle 20 drückt nicht mehr auf das Eingangsgetriebe 39.

Bei dieser Ausweichbewegung schwenkt das Getriebe um die Ausgangswellen 18 des Eingangegetriebes 15. An dem übrigen Antrieb wird keine Veränderung vorgenommen.

Um den Zentrifugaldüngerstreuer in einen funktionsfähigen Zustand zu versetzen, muß der Schlepperfahrer jetzt die Gelenkwelle 20 entsprechend den Bedienungsanleitungen der Gelenkwelle 20 bzw. des Zentrifugaldüngerstreuers 1 auf das entsprechende Maß kürzen. Der Landwirt hätte an sich schon beim unmittelbaren Einbau des Zentrifugaldüngerstreuers überprüfen sollen, ob die Gelenkwelle die vorgeschriebene Länge aufweist. Es ist also, wie bereits vor gesagt, die Gelenkwelle 20 auf die richtige Länge zu kürzen.

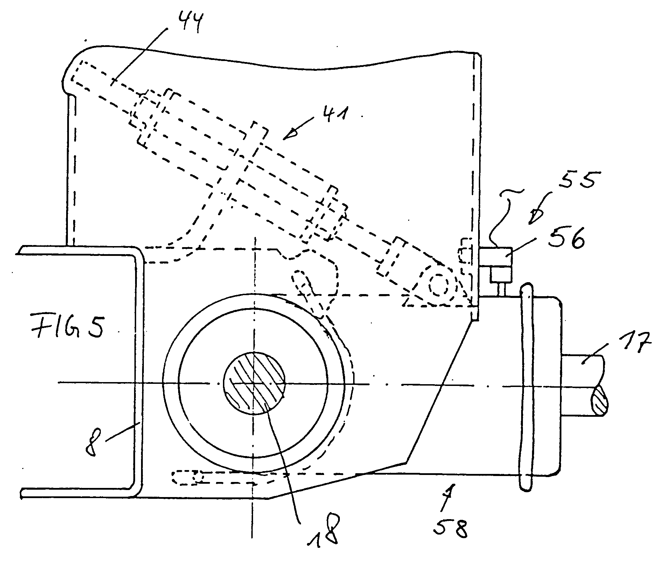

Das Ausführungsbeispiel gemäß Fig. 5 unterscheidet sich von dem Ausführungsbeispiel gemäß Fig. 4 dadurch, daß die zweite Stufe der Sicherungseinrichtung nicht als Abscherelement 50 sondern als Alarmeinrichtung 55 ausgebildet ist. Diese Alarmeinrichtung 55 weist einen Sensor 56 auf, der über ein Kabel 57 mit einer Signaleinrichtung verbunden ist. Wenn das Eingangsgehäuse 58 aus der in Fig. 5 dargestellten Normalposition verschwenkt wird, gibt der Sensor 56 ein Signal ab, durch welches die Signaleinrichtung ausgelöst wird.

## Patentansprüche

1. Landwirtschaftliche Maschine mit einem eine Eingangswelle aufweisenden Eingangsgehäuse, die von einer Kraftwelle eines Schleppers über eine Gelenkwelle antreibbar ist, wobei das maschinenseitige Eingangsgehäuse ausweichbar angeordnet ist und mittels einer Sicherungseinrichtung in Normalstellung gehalten wird, dadurch gekennzeichnet, daß das Eingangsgehäuse (40) mittels zumindest zweier Laschen am Rahmen (8) um eine durch zumindest eine Antriebswelle verlaufende und sich quer zur Fahrtrichtung erstreckenden Achse schwenkbar am Rahmen (8) befestigt ist, daß die Sicherungseinrichtung als erste Stufe zumindest eine Feder (46) aufweist, welche zwischen dem Rahmen (8) und dem Eingangsgehäuse angeordnet ist und das Eingangsgehäuse (40) mit einem Anschlagelement (42), welches zwischen dem Rahmen und dem Eingangsgehäuse (40) zur Begrenzung der Schwenkbewegung des Eingangsgehäuses (40) angeordnet ist, zusammenwirkt, und daß die Sicherungseinrichtung ein weiteres, die zweite Stufe bildendes, als Anschlagelement (47, 50) ausgebildetes Sicherungselement zur Begrenzung der Schwenkbewegung des Eingangsgehäuses (40) nach unten vorhanden ist.

2. Maschine nach Anspurch 1, dadurch gekennzeichnet, daß die erste Stufe der Sicherungseinrichtung von einer Feder (41) und die zweite Stufe von zumindest einem Abscherelement (50) gebildet wird.

3. Maschine nach Anspruch 1, dadurch gekennzeichnet, daß die erste Stufe der Sicherungseinrichtung von einer Feder (46) und die zweite Stufe von einer Alarmeinrichtung (52,55) gebildet wird.

4. Maschine nach einem oder mehreren der vorstehenden Ansprüche, dadurch gekennzeichnet, daß die Sicherungseinrichtung als Feder (46) mit zumindest einem Stellelement,wie beispielsweise einer Stellschraube (44) und/oder Stellmutter (48) ausgebildet ist.

5. Maschine nach Anspruch 4, dadurch gekennzeichnet, daß der Anschlag als Abscherelement ausgebildet ist.

6. Maschine nach Anspruch 1, dadurch gekennzeichnet, daß das Eingangsgehäuse mit einem Schnellverschluß am Rahmen angeordnet ist.

7. Maschine nach einem oder mehreren der vorstehenden Ansprüche, dadurch gekennzeichnet, daß am Rahmen eine Halterung mit einer Bohrung angeordnet ist, daß in diese Halterung das Eingangsgehäuse faßt, daß am Rahmen eine eine U-förmige Aufnahmeöffnung aufweisende Lasche angeordnet ist, in welche das Eingangsgehäuse faßt, und in welcher das Eingangsgehäuse mit einer Spange, die vorzugsweise als Federspange ausgebildet ist, gehalten wird.

## Claims

1. Agricultural machine, having an input housing provided with an input shaft, which machine is drivable by a power shaft of a tractor via a universal-jointed shaft, the singe-gear housing on the machine side being disposed in a yieldable manner and being retained in a normal position by means of a safety arrangement, characterised in that the input housing (40) is mounted on the frame (8)^{*} by means of at least two lugs on the frame (8) so as to be pivotable about an axis, which passes through at least one drive shaft and extends transversely relative to the direction of travel, in that the safety arrangement includes, as the first stage, at least one spring (46) which is disposed between the frame (8) and the input housing, and the input housing (40) co-operates with a stop member (42), which is disposed between the frame and the input housing (40) in order to define the pivotal movement of the input housing (40), and in that the safety arrangement is an additional safety member, which forms the second stage and is in the form of stop member (47, 50), in order to define the pivotal movement of the input housing (40) downwardly.

2. Machine according to claim 1, characterised in that the first stage of the safety arrangement is formed by a spring (41), and the second stage is formed by at least one shearing member (50).

3. Machine according to claim 1, characterised in that the first stage of the safety arrangement is formed by a spring (46), and the second stage is formed by an alarm system (52, 55).

4. Machine according to one or more of the proceeding claims, characterised that the safety arrangement is in the form of spring (46) having at least one adjusting member such as, for example, an adjusting screw (44) and/or adjusting nut (48).

5. Machine according to claim 4, characterised in that the stop member is in the form of a shearing member.

6. Machine according to claim 1, characterised in that the input housing is disposed on the frame with a quick-release closure.

7. Machine according to one or more of the preceding claims, characterised in that a holder is disposed on the frame and has a bore, in that the input housing fits into this holder, and in that a lug, which includes a U-shaped receiver aperture, is disposed on the frame, the input housing fitting into said lug, and the input housing being retained in said lug by means of a clip which is preferably in the form of a resilient clip.

## Revendications

1. Machine agricole (1) comportant un carter d'entrée avec un arbre d'entrée entraîné par la prise de force d'un tracteur par l'intermédiaire d'un arbre à cardans, le carter d'entrée du côté de la machine pouvant s'échapper et étant maintenu en position normale à l'aide d'une installation de sécurité,
caractérisée en ce que
• le carter d'entrée (50) est fixé à l'aide d'au moins deux pattes au châssis (8) de manière pivotante au châssis (8) autour d'un axe transversal à la direction de déplacement et qui passe par au moins un arbre d'entraînement,.
• l'installation de sécurité comporte comme premier niveau au moins un ressort (46) entre le châssis (8) et le carter d'entrée, et le carter d'entrée (40) coopère avec un élément de butée (42) prévu entre le châssis et le carter d'entrée (40) pour limiter le mouvement de basculement du carter d'entrée (40), et
• l'installation de sécurité comporte un autre élément de sécurité constituant un second niveau de sécurité, en forme d'élément de butée (47, 50) pour limiter vers le bas le mouvement de basculement du carter d'entrée 40.

2. Machine selon la revendication 1,
caractérisée en ce que
le premier niveau de l'installation de sécurité est formé par un élément élastique (41), et le second niveau est formé par au moins un élément cisaillable (50).

3. Machine selon la revendication 1,
caractérisée en ce que
le premier niveau de l'installation de sécurité est formé par un ressort (46), et le second niveau est formé par une installation d'alarme (52, 55).

4. Machine selon l'une ou plusieurs des revendications précédentes,
caractérisée en ce que
l'installation de sécurité est réalisée sous la forme d'un ressort (46) avec au moins un élément de réglage tel qu'une vis de réglage (44) et/ou un écrou de réglage (48).

5. Machine selon la revendication 4,
caractérisée en ce que
la butée est en forme d'élément de cisaillement.

6. Machine selon la revendication 1,
caractérisée en ce que
le carter d'entrée est monté sur le châssis au moyen d'un raccord rapide.

7. Machine selon l'une ou plusieurs des revendications précédentes
caractérisée en ce qu'
un moyen de fixation muni d'un perçage est prévu sur le châssis, le carter d'entrée vient prendre dans ce moyen de fixation, et le châssis comporte une patte ayant une ouverture en forme de U dans laquelle vient prendre le carter d'entrée et qui maintient le carter d'entrée, avec une pince, de préférence sous la forme d'une pince à ressort.
